Europäisches Patentamt

(19) European Patent Office

Office européen des brevets

(11) Publication number: **0 193 153 B1**

(12) **EUROPEAN PATENT SPECIFICATION**

(45) Date of publication of patent specification: **13.11.91**   (51) Int. Cl.⁵: **G11B 20/14**, G11B 20/12, //H03M5/14

(21) Application number: **86102361.2**

(22) Date of filing: **24.02.86**

(54) Digital data recording and reproducing method.

(30) Priority: 25.02.85 JP 35759/85
16.05.85 JP 104229/85

(43) Date of publication of application:
03.09.86 Bulletin 86/36

(45) Publication of the grant of the patent:
13.11.91 Bulletin 91/46

(84) Designated Contracting States:
DE GB

(56) References cited:
EP-A- 0 058 081    EP-A- 0 123 563
FR-A- 2 486 740    FR-A- 2 504 755
GB-A- 1 540 617    GB-A- 2 056 225
GB-A- 2 094 107    GB-A- 2 111 805

IBM TECHNICAL DISCLOSURE BULLETIN, vol.
17, no. 3, August 1974, page 689, New York,
US; A.M. PATEL: "Synchronization for zero
modulation code"

JOURNAL OF THE SOCIETY OF MOTION PIC-
TURE AND TELEVISION ENGINEERS, vol. 92,
no. 9, September 1983, pages 918-922, Scars-
dale, New York, US; H. YOSHIDA et al.: "8-9
Block code: a DC-free channel code for digi-
tal magnetic recording"

(73) Proprietor: MATSUSHITA ELECTRIC INDUSTRI-
AL CO., LTD.
1006, Oaza Kadoma
Kadoma-shi, Osaka-fu, 571(JP)

(72) Inventor: Takeuchi, Kousou
11-207, Tanimachi 5-chome Higashi-ku
Osaka City, 540(JP)

(74) Representative: Patentanwälte Kirschner &
Grosse
Forstenrieder Allee 59
W-8000 München 71(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to a digital data recording and reproducing method, and more particularly to a new and improved method for encoding and reproducing binary digital data and for recording synchronizing signals thereof.

When digital data are recorded on a magnetic tape or are reproduced therefrom by using a rotary magnetic head, encoded binary signals corresponding to the digital data are generally transmitted to the rotary magnetic head through a rotary transformer. If the encoded binary signals contain DC component, these are not normally recorded on the magnetic tape since the rotary transformer does not transmit the DC component.

A prior art for eliminating the DC component of the encoded binary signals is disclosed in the JOURNAL OF THE SOCIETY OF MOTION PICTURE AND TELEVISION ENGINEERS, Vol. 92, No. 9, September 1983, pages 918 to 922. In this document a 8-bit data word is transformed into a 9-bit code word. Since the 8-9 block code has no zero CDS (code word digital sum) code words, positive and negative CDS code words are alternately used in a sequence of code words.

A similar method for encoding binary data is shown in the FR-A-2 504 755. A code free of DC components is reached by using pairs of data words of two different lengthes (M,N) and depending on the polarity of the last bit of the first word transmitted, the polarity of the first bit of the second word transmitted is selected. More precisely, a first code word with a positive CDS is followed by a second code word, that is selected to have a negative CDS. However, the density ratio in the above mentioned documents is smaller than 1. (Density ratio = Tmin/T, where T is data clock and Tmin is minimum magnetization reversal interval)

In the conventional digital data recording method, digital data sequence is divided into predetermined data units. A frame synchronizing signal and an error detection code are added to an each data unit, thereby to form a frame. The frame with the frame synchronizing signal and the error detecting code are encoded and are recorded on a recording medium. In the reproducing process, the frame synchronizing signal is detected from the reproduced code sequence. The detected frame synchronizing signals are used for synchronization of clock signals, and for control of starting point, whereby the respective unit of the digital data are distinguished with each other. As mentioned above, since the frame synchronizing signal has the important function, it must be surely detected. As to selection of a method from many kinds of the frame synchronizing signals in the conventional methods, in order to avoid misdetection of the frame synchronizing signal when the position of a bit is shifted to an abnormal position, a special bit sequence, for example, the bit sequence with a long magnetization reversal interval which is used frequently is adopted. However, the plural bit sequence, exist in the code sequence and there is a fear of misdetection of the frame synchronizing signals. In order to avoid the above-mentioned misdetection, a protection circuit for synchronizing signal which utilizes cyclic issue of the frame synchronizing signal is necessary. Nevertheless, there is a defect that when the frame synchronizing signals of continuous data units are not detected due to dropout of the recording medium, comparatively long time is required for resumption of the certain detection of the frame synchronizing signals. Therefore, it is required to select the most suitable protection circuit system for synchronizing signal in accordance with the function of the recording and reproducing apparatus. These circuits are generally formed by complex circuits, hence a careful design of the system is required.

A first object of the present invention is to provide a high density and a great density ratio (Tmin/T) digital encoding method for magnetic recording wherein DC component of a code sequence is little and a minimum magnetization reversal interval (Tmin) is large.

A second object of the present invention is to provide a digital encoding method wherein a digital data sequence is cut at every predetermined sections of digital data, and a frame synchronizing signal and a error detecting code are added to every digital data units. As a result, when the digital data are reproduced, misdetection of the frame synchronizing signal decreases. In this specification, the high level and the low level of the encoded signal are shown by representations of "1" and "0", respectively.

In order to realize the above mentioned objects, a data recording and reproducing method according to claim 1 and a digital data recording and reproducing apparatus according to claim 2 are provided.

Preferred embodiments of the inventive method are claimed in subclaims 3 and 4.

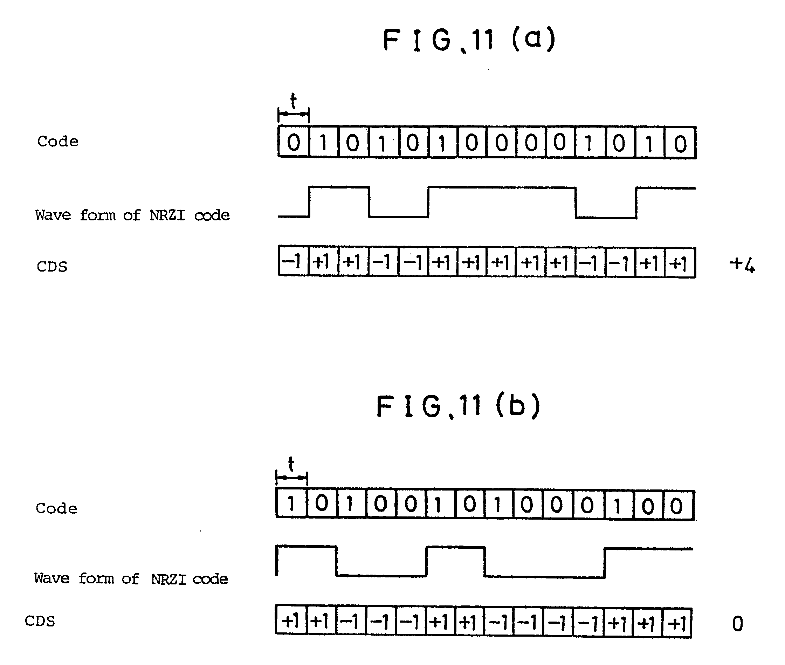

In the following a preferred embodiment of the invention is described by means of figures 1 to 12, in which:

FIG.1 is a circuit diagram of an encoder for use in the digital data recording and reproducing method in accordance with the present invention.

FIG.2 is a timing chart showing change of polarity in a digital code sequence and change of DSV (digital

EP 0 193 153 B1

sum variation) in a code sequence wherein eight bit digital data are encoded to 14-bit code, in an embodiment of the present invention.

FIG.3 is a timing chart showing an operation of the encoder in the embodiment in accordance with the present invention.

FIG.4 is a circuit diagram of a decoder in the embodiment.

FIG.5 is a timing chart showing an operation of the decoder.

FIG.6(a) is a block diagram of an encoding and a recording circuits in the embodiment.

FIG.6(b) is a block diagram of a decoding and reproducing circuit in the embodiment.

FIG.7 is a frame construction in the embodiment in accordance with the present invention.

FIG.8 is a circuit diagram of the circuit for adding the frame synchronizing signal of the embodiment.

FIG.9 is a timing chart showing an operation of the circuit for adding the frame synchronizing signal.

FIG.10 is a circuit diagram of the detecting circuit of the embodiment.

FIG.11(a) and FIG.11(b) are timing charts showing an operation of CDS (code word digital sum) in the embodiment.

FIG.12(a), FIG.12(b) and FIG.12(c) are timing charts showing a relation between CDS and DSV of the embodiment.

## DESCRIPTION OF THE PREFERRED EMDODIMENTS

An encoding method in accordance with the present invention relates to convert an 8-bit digital data to 14-bit code. As well known, 14-bit binary code can represent sixteen thousand three hundred and eighty-four data. Four hundred and seven code patterns of 8-bit digital data are selected from the sixteen thousand three hundred and eighty-four data according to the following algorithm. A truth tables of codes are shown in Table 1.

## Table 1

| Data | Group A | | | | Group B | | | |
|------|---------|---|---|---|---------|---|---|---|
| | Code | C | D | S | Code | C | D | S |
| 00 | 01001010101010 | | | 0 | 01001010101010 | | | 0 |
| 01 | 01010100101010 | | | 0 | 01010100101010 | | | 0 |
| 02 | 01010101010010 | | | 0 | 01010101010010 | | | 0 |
| 03 | 10010010101010 | | | 0 | 10010010101010 | | | 0 |
| 04 | 10010101001010 | | | 0 | 10010101001010 | | | 0 |
| 05 | 10010101010100 | | | 0 | 10010101010100 | | | 0 |
| 06 | 10100100101010 | | | 0 | 10100100101010 | | | 0 |
| 07 | 10100101010010 | | | 0 | 10100101010010 | | | 0 |
| 08 | 10101001001010 | | | 0 | 10101001001010 | | | 0 |
| 09 | 10101001010100 | | | 0 | 10101001010100 | | | 0 |
| 0A | 10101010010010 | | | 0 | 10101010010010 | | | 0 |
| 0B | 10101010100100 | | | 0 | 10101010100100 | | | 0 |
| 0C | 01001001010010 | | | 0 | 01001001010010 | | | 0 |
| 0D | 01010010010010 | | | 0 | 01010010010010 | | | 0 |
| 0E | 01010010100100 | | | 0 | 01010010100100 | | | 0 |
| 0F | 01001001000100 | | | 0 | 01001001000100 | | | 0 |
| 10 | 10001000100100 | | | 0 | 10001000100100 | | | 0 |
| 11 | 10001001001000 | | | 0 | 10001001001000 | | | 0 |
| 12 | 10010001000100 | | | 0 | 10010001000100 | | | 0 |
| 13 | 10010010001000 | | | 0 | 10010010001000 | | | 0 |
| 14 | 01001000101010 | | | 0 | 01001000101010 | | | 0 |
| 15 | 01001010100010 | | | 0 | 01001010100010 | | | 0 |

| 16 | 01010001001010 | 0 | 01010001001010 | 0 |
|----|----------------|---|----------------|---|
| 17 | 01010001010100 | 0 | 01010001010100 | 0 |
| 18 | 01010100100010 | 0 | 01010100100010 | 0 |
| 19 | 01010101000100 | 0 | 01010101000100 | 0 |
| 1A | 10010001010010 | 0 | 10010001010010 | 0 |
| 1B | 10010010100010 | 0 | 10010010100010 | 0 |
| 1C | 10100010010010 | 0 | 10100010010010 | 0 |
| 1D | 10100010100100 | 0 | 10100010100100 | 0 |
| 1E | 10100100100010 | 0 | 10100100100010 | 0 |
| 1F | 10100101000100 | 0 | 10100101000100 | 0 |
| 20 | 01000100010010 | 0 | 01000100010010 | 0 |
| 21 | 01000100100100 | 0 | 01000100100100 | 0 |
| 22 | 01000101001000 | 0 | 01000101001000 | 0 |
| 23 | 01001000100010 | 0 | 01001000100010 | 0 |
| 24 | 01001010001000 | 0 | 01001010001000 | 0 |
| 25 | 01010010000100 | 0 | 01010010000100 | 0 |
| 26 | 10000100010100 | 0 | 10000100010100 | 0 |
| 27 | 10000100101000 | 0 | 10000100101000 | 0 |
| 28 | 10001000010010 | 0 | 10001000010010 | 0 |
| 29 | 10001010010000 | 0 | 10001010010000 | 0 |
| 2A | 10010000100010 | 0 | 10010000100010 | 0 |
| 2B | 10010100010000 | 0 | 10010100010000 | 0 |
| 2C | 10100010000100 | 0 | 10100010000100 | 0 |
| 2D | 10100100001000 | 0 | 10100100001000 | 0 |
| 2E | 10010000101010 | 0 | 10010000101010 | 0 |

5

| Data | Group A | | | Group B | | |
|---|---|---|---|---|---|---|
| | Code | C D S | | Code | C D S | |
| 2F | 10010101000010 | 0 | | 10010101000010 | 0 | |
| 30 | 10100001001010 | 0 | | 10100001001010 | 0 | |
| 31 | 10100001010100 | 0 | | 10100001010100 | 0 | |
| 32 | 10101001000010 | 0 | | 10101001000010 | 0 | |
| 33 | 10101010000100 | 0 | | 10101010000100 | 0 | |
| 34 | 01000010001010 | 0 | | 01000010001010 | 0 | |
| 35 | 01000010010100 | 0 | | 01000010010100 | 0 | |
| 36 | 01000010101000 | 0 | | 01000010101000 | 0 | |
| 37 | 01010001000010 | 0 | | 01010001000010 | 0 | |
| 38 | 01010100001000 | 0 | | 01010100001000 | 0 | |
| 39 | 10000100001010 | 0 | | 10000100001010 | 0 | |
| 3A | 10000101010000 | 0 | | 10000101010000 | 0 | |
| 3B | 10100001000010 | 0 | | 10100001000010 | 0 | |
| 3C | 10101000010000 | 0 | | 10101000010000 | 0 | |
| 3D | 01000100000100 | 0 | | 01000100000100 | 0 | |
| 3E | 01001000001000 | 0 | | 01001000001000 | 0 | |
| 3F | 01000010000010 | 0 | | 01000010000010 | 0 | |
| 40 | 01010000010000 | 0 | | 01010000010000 | 0 | |
| 41 | 10001000000100 | 0 | | 10001000000100 | 0 | |
| 42 | 10010000001000 | 0 | | 10010000001000 | 0 | |
| 43 | 10000100000010 | 0 | | 10000100000010 | 0 | |
| 44 | 10100000010000 | 0 | | 10100000010000 | 0 | |

| | | | | |
|-----|-----------------|-----|-----------------|-----|
| 45 | 01001001010100 | 2 | 00010100100100 | −4 |
| 46 | 01001010100100 | 2 | 00100100010100 | −4 |
| 47 | 01010100100100 | 2 | 00101000100100 | −4 |
| 48 | 10001001010010 | 2 | 01001000101000 | −4 |
| 49 | 10010010010010 | 2 | 01010010010000 | −4 |
| 4A | 00010101010010 | −2 | 10000100100010 | 4 |
| 4B | 00101010100010 | −2 | 00100010010000 | 4 |
| 4C | 01010010100010 | −2 | 10000010000100 | 4 |
| 4D | 00001000101010 | −2 | 01010100001010 | 4 |
| 4E | 00010001010100 | −2 | 10000101010010 | 4 |
| 4F | 00010101000100 | −2 | 10100101010000 | 4 |
| 50 | 10100100010010 | 2 | 00001010010010 | −4 |
| 51 | 10100101001000 | 2 | 00100100001010 | −4 |
| 52 | 10000100010010 | 2 | 00101000010010 | −4 |
| 53 | 00010001001000 | 2 | 01001001010000 | −4 |
| 54 | 00100100010000 | 2 | 10010000101000 | −4 |
| 55 | 10101000101010 | 2 | 10100001001000 | −4 |
| 56 | 00101000100010 | −2 | 01000101000010 | 4 |
| 57 | 01000100010100 | −2 | 10000101000100 | 4 |
| 58 | 01001000010010 | −2 | 10001010000100 | 4 |
| 59 | 00100010101010 | 2 | 00001010000100 | −4 |
| 5A | 01010001000100 | −2 | 00010001010000 | 4 |
| 5B | 10001000101000 | −2 | 01000010001000 | 4 |
| 5C | 00101010001010 | 2 | 01001000001010 | −4 |
| 5D | 01000100101010 | 2 | 10010000010100 | −4 |

7

| Data | Group A | | | Group B | | |
|------|---------|---|---|---------|---|---|
| | Code | C D S | | Code | C D S | |
| 5E | 10010010010000 | -2 | | 01000001010010 | 4 | |
| 5F | 00001000100010 | -2 | | 10000001001010 | 4 | |
| 60 | 00010010000100 | -2 | | 10010010000010 | 4 | |
| 61 | 01010010001010 | 2 | | 00010010000010 | -4 | |
| 62 | 00010000010000 | -2 | | 00010000010100 | 4 | |
| 63 | 01010000101010 | -2 | | 01000001000100 | 4 | |
| 64 | 01010100010010 | 2 | | 10010000001010 | -4 | |
| 65 | 10001010100010 | 2 | | 00100100000010 | -4 | |
| 66 | 10010100100010 | 2 | | 01001000000010 | -4 | |
| 67 | 10100010001010 | 2 | | 10010000000010 | -4 | |
| 68 | 10100010101000 | 2 | | 00010100010100 | -6 | |
| 69 | 10101010001000 | 2 | | 00101000101000 | -6 | |
| 6A | 10100101000010 | -2 | | 10001010001010 | 6 | |
| 6B | 01000100100010 | 2 | | 00001010010100 | -6 | |
| 6C | 10000010001010 | 2 | | 00010100001010 | -6 | |
| 6D | 10001000100010 | 2 | | 00101000010100 | -6 | |
| 6E | 10010010000100 | 2 | | 01010000101000 | -6 | |
| 6F | 00010000100100 | 2 | | 10100001010000 | -6 | |
| 70 | 01000100001010 | -2 | | 10001010101000 | 6 | |
| 71 | 01010000100010 | -2 | | 10010100101000 | 6 | |
| 72 | 10001001010000 | -2 | | 10000010001000 | 6 | |
| 73 | 10100001000100 | -2 | | 10000101010100 | 6 | |

| | | | | |
|-----|------------------|-----|------------------|-----|
| 74 | 00010001000010 | −2 | 10010101010000 | 6 |
| 75 | 00100100000100 | −2 | 10101001010000 | 6 |
| 76 | 10101010000010 | −2 | 00100001010000 | 6 |
| 77 | 00100001000100 | 2 | 01010000010100 | −6 |
| 78 | 10001000001010 | −2 | 01000010010000 | 6 |
| 79 | 01001000010000 | 2 | 00001010000010 | −6 |
| 7A | 00101000001000 | −2 | 10101000001010 | 6 |
| 7B | 10001000001000 | 2 | 01010000001010 | −6 |
| 7C | 00100101000010 | 2 | 00010100000010 | −6 |
| 7D | 01010000001000 | −2 | 00100000101000 | 6 |
| 7E | 01000010010010 | 2 | 10100000001010 | −6 |
| 7F | 10001000000010 | −2 | 10000000100010 | 6 |
| 80 | 01001001000010 | 2 | 01010000000010 | −6 |
| 81 | 01000010100100 | 2 | 00101000000010 | −6 |
| 82 | 10010000000100 | −2 | 01000001001000 | 6 |
| 83 | 01000100000010 | −2 | 10001010000010 | 6 |
| 84 | 00100001010010 | 2 | 10100000010100 | −6 |
| 85 | 01001000000100 | −2 | 10000010100010 | 6 |
| 86 | 00100010000010 | −2 | 10000010101010 | 6 |
| 87 | 10100000100010 | −2 | 10000001000100 | 6 |
| 88 | 01000100001000 | 2 | 10100000101000 | −6 |
| 89 | 00010010010000 | 2 | 00101000001010 | −6 |
| 8A | 10100000101010 | −2 | 10000101000010 | 6 |
| 8B | 00010100001000 | −2 | 10101000010100 | 6 |
| 8C | 00001010001000 | −2 | 10010100001010 | 6 |
| 8D | 10010000010010 | −2 | 10000101001010 | 6 |

9

EP 0 193 153 B1

| Data | Group A | | | Group B | | |
|------|---------|---|---|---------|---|---|
| | Code | C D S | | Code | C D S | |
| 8E | 10001000010100 | -2 | | 10101000101000 | 6 | |
| 8F | 01000101010000 | -2 | | 10010100010100 | 6 | |
| 90 | 00001010100010 | -2 | | 10001010010100 | 6 | |
| 91 | 00001000101000 | 2 | | 01010001010000 | -6 | |
| 92 | 10001010001000 | 2 | | 00101001010000 | -6 | |
| 93 | 10000100100100 | 2 | | 00010101010000 | -6 | |
| 94 | 01000101000100 | 2 | | 00001010101000 | -6 | |
| 95 | 00100010100010 | 2 | | 00001010001010 | -6 | |
| 96 | 10100001010010 | -2 | | 10000100010000 | 6 | |
| 97 | 10101000100010 | 2 | | 00010100101000 | -6 | |
| 98 | 10100010010100 | 2 | | 10100000000100 | -4 | |
| 99 | 10010101000100 | 2 | | 01010000000100 | -4 | |
| 9A | 10010001010100 | 2 | | 00101000000100 | -4 | |
| 9B | 10001000101010 | 2 | | 10100000010010 | -4 | |
| 9C | 01010101000010 | -2 | | 10000000010000 | 4 | |
| 9D | 00001010101010 | -2 | | 00100000010010 | 4 | |
| 9E | 01010010101000 | 2 | | 00010100000100 | -4 | |
| 9F | 00001000001000 | -2 | | 10010100000100 | 4 | |
| A0 | 00001001000100 | -2 | | 10000010100100 | 4 | |
| A1 | 10100010001000 | -2 | | 01001010000010 | 4 | |
| A2 | 01000101010010 | 2 | | 10100000100100 | -4 | |
| A3 | 00101010101000 | 2 | | 01010000010010 | -4 | |

10

| A4 | 10010000100100 | −2 | 10000001000010 | 4 |
| A5 | 01010100010000 | −2 | 00100000100100 | 4 |
| A6 | 01001010010000 | −2 | 00010000101000 | 4 |
| A7 | 10101010100010 | 2 | 00001001000010 | −4 |
| A8 | 01000100101000 | −2 | 10001001000010 | 4 |
| A9 | 00101010001000 | −2 | 10000010010010 | 4 |
| AA | 00100010101000 | −2 | 01000010100010 | 4 |
| AB | 10001010101010 | 2 | 10010001010000 | −4 |
| AC | 00100010001000 | 2 | 01010000100100 | −4 |
| AD | 10001001000100 | 2 | 01001000010100 | −4 |
| AE | 10101001000100 | 2 | 00100101010000 | −4 |
| AF | 10100100100100 | 2 | 00001010100100 | −4 |
| B0 | 00100010001010 | −2 | 10101000010010 | 4 |
| B1 | 00010100100010 | −2 | 10100100001010 | 4 |
| B2 | 00001001010010 | −2 | 01010101010000 | 4 |
| B3 | 10100010100010 | −2 | 01000010101010 | 4 |
| B4 | 01010001010010 | −2 | 01000100010000 | 4 |
| B5 | 00101000101010 | −2 | 00100001001000 | 4 |
| B6 | 10010010100100 | 2 | 10100010010000 | −4 |
| B7 | 10010001001010 | 2 | 01010001001000 | −4 |
| B8 | 01010101001000 | 2 | 00101010010000 | −4 |
| B9 | 01010010010100 | 2 | 00100100101000 | −4 |
| BA | 01001010010010 | 2 | 00010101001000 | −4 |
| BB | 01001001001010 | 2 | 00010100010010 | −4 |
| BC | 00101010010100 | 2 | 00010010101000 | −4 |
| BD | 00100101010100 | 2 | 00010010001010 | −4 |

| Data | Group A | | | Group B | | |
|------|---------|---|---|---------|---|---|
| | Code | C D S | | Code | C D S | |
| BE | 0010010100101 0 | 2 | | 000010010101 00 | -4 | |
| BF | 10101001010010 | 2 | | 0000100100101 0 | -4 | |
| C0 | 00010100101010 | -2 | | 10101010010000 | 4 | |
| C1 | 10101010101000 | -2 | | 10101000100100 | 4 | |
| C2 | 10101010001010 | -2 | | 10100100101000 | 4 | |
| C3 | 10100010101010 | -2 | | 10100100010100 | 4 | |
| C4 | 10100100010000 | -2 | | 10010100010010 | 4 | |
| C5 | 10010001001000 | -2 | | 10010010101000 | 4 | |
| C6 | 01010010001000 | -2 | | 10010010001010 | 4 | |
| C7 | 01001001001000 | -2 | | 10001010100100 | 4 | |
| C8 | 01001000100100 | -2 | | 10001010010010 | 4 | |
| C9 | 00101001000100 | -2 | | 10000100101010 | 4 | |
| CA | 00100101001000 | -2 | | 01010100101000 | 4 | |
| CB | 00100100010010 | -2 | | 01010100010100 | 4 | |
| CC | 00100010010100 | -2 | | 01001010101000 | 4 | |
| CD | 00010010100100 | -2 | | 01001010001010 | 4 | |
| CE | 00010010010010 | -2 | | 01000101010100 | 4 | |
| CF | 00010001001010 | -2 | | 01000101001010 | 4 | |
| D0 | 00101001010010 | -2 | | 10001000010000 | 4 | |
| D1 | 10101010010100 | -2 | | 10000100001000 | 4 | |
| D2 | 10010101010010 | 2 | | 00101001001000 | -4 | |
| D3 | 10010100101010 | 2 | | 00010010010100 | -4 | |

| | | | | |
|---|---|---|---|---|
| D4 | 101001010101 00 | – 2 | 10101001001000 | 4 |
| D5 | 10100101001010 | – 2 | 10010101001000 | 4 |
| D6 | 01010101010100 | – 2 | 10010100100100 | 4 |
| D7 | 01010101001010 | – 2 | 10010010010100 | 4 |
| D8 | 01010010101010 | – 2 | 10001001010100 | 4 |
| D9 | 00101010101010 | – 2 | 10001001001010 | 4 |
| DA | 00100100100100 | – 2 | 01001010010100 | 4 |
| DB | 10101010101010 | 2 | 00001000010000 | – 4 |
| DC | 00100000010000 | 0 | 00100000010000 | 0 |
| DD | 00001000000100 | 0 | 00001000000100 | 0 |
| DE | 00010000001000 | 0 | 00010000001000 | 0 |
| DF | 00101000010000 | 0 | 00101000010000 | 0 |
| E0 | 00100001000010 | 0 | 00100001000010 | 0 |
| E1 | 00001010010000 | 0 | 00001010010000 | 0 |
| E2 | 00101010000100 | 0 | 00101010000100 | 0 |
| E3 | 00101001000010 | 0 | 00101001000010 | 0 |
| E4 | 00100001010100 | 0 | 00100001010100 | 0 |
| E5 | 00010101000010 | 0 | 00010101000010 | 0 |
| E6 | 00010000101010 | 0 | 00010000101010 | 0 |
| E7 | 00100100001000 | 0 | 00100100001000 | 0 |
| E8 | 00100010000100 | 0 | 00100010000100 | 0 |
| E9 | 00010100010000 | 0 | 00010100010000 | 0 |
| EA | 00010000100010 | 0 | 00010000100010 | 0 |
| EB | 00001001001000 | 0 | 00001001001000 | 0 |
| EC | 00001000010010 | 0 | 00001000010010 | 0 |
| ED | 00100101000100 | 0 | 00100101000100 | 0 |

| Data | Group A | | Group B | |
|---|---|---|---|---|
| | Code | ·CDS | Code | C D S |
| EE | 0 0 1 0 0 1 0 0 1 0 0 0 1 0 | 0 | 0 0 1 0 0 1 0 0 1 0 0 0 1 0 | 0 |
| EF | 0 0 1 0 0 0 1 0 1 0 0 1 0 0 | 0 | 0 0 1 0 0 0 1 0 1 0 0 1 0 0 | 0 |
| F0 | 0 0 1 0 0 0 0 1 0 0 1 0 1 0 | 0 | 0 0 1 0 0 0 0 1 0 0 1 0 1 0 | 0 |
| F1 | 0 0 0 1 0 0 1 0 1 0 0 0 1 0 | 0 | 0 0 0 1 0 0 1 0 1 0 0 0 1 0 | 0 |
| F2 | 0 0 0 1 0 0 0 1 0 1 0 0 1 0 | 0 | 0 0 0 1 0 0 0 1 0 1 0 0 1 0 | 0 |
| F3 | 0 0 0 1 0 1 0 1 0 1 0 1 0 0 | 0 | 0 0 0 1 0 1 0 1 0 1 0 1 0 0 | 0 |
| F4 | 0 0 0 1 0 1 0 1 0 0 1 0 1 0 | 0 | 0 0 0 1 0 1 0 1 0 0 1 0 1 0 | 0 |
| F5 | 0 0 0 1 0 0 1 0 0 0 1 0 0 0 | 0 | 0 0 0 1 0 0 1 0 0 0 1 0 0 0 | 0 |
| F6 | 0 0 0 1 0 0 0 1 0 0 0 1 0 0 | 0 | 0 0 0 1 0 0 0 1 0 0 0 1 0 0 | 0 |
| F7 | 0 0 0 0 1 0 0 0 1 0 0 1 0 0 | 0 | 0 0 0 0 1 0 0 0 1 0 0 1 0 0 | 0 |
| F8 | 0 0 1 0 0 0 1 0 0 1 0 0 1 0 | 0 | 0 0 1 0 0 0 1 0 0 1 0 0 1 0 | 0 |
| F9 | 0 0 1 0 1 0 1 0 1 0 0 1 0 0 | 0 | 0 0 1 0 1 0 1 0 1 0 0 1 0 0 | 0 |
| FA | 0 0 1 0 1 0 1 0 0 1 0 0 1 0 | 0 | 0 0 1 0 1 0 1 0 0 1 0 0 1 0 | 0 |
| FB | 0 0 1 0 1 0 0 1 0 1 0 1 0 0 | 0 | 0 0 1 0 1 0 0 1 0 1 0 1 0 0 | 0 |
| FC | 0 0 1 0 1 0 0 1 0 0 1 0 1 0 | 0 | 0 0 1 0 1 0 0 1 0 0 1 0 1 0 | 0 |
| FD | 0 0 1 0 0 1 0 1 0 1 0 0 1 0 | 0 | 0 0 1 0 0 1 0 1 0 1 0 0 1 0 | 0 |
| FE | 0 0 1 0 0 1 0 0 1 0 1 0 1 0 | 0 | 0 0 1 0 0 1 0 0 1 0 1 0 1 0 | 0 |
| FF | 0 0 0 1 0 0 1 0 1 0 1 0 1 0 | 0 | 0 0 0 1 0 0 1 0 1 0 1 0 1 0 | 0 |

The value of an end bit of a full code is "0" and one bit of value "0" and more is/are inserted between two bits of value "1" in the code. Furthermore, the number of the bit of value "0" are restricted to eight and below. The number of the sequence of bit of value "0" at both the end parts of the code are restricted to 4 and below. Therefore, one bit of value "0" and over or eight bits of value "0" and below are contained between two bits of value "1" in the code sequence. The above-mentioned code is assigned to digital data as follows:

At first, a CDS (code word digital sum) of the full code are calculated, and respective code wherein the CDS is equal to zero (CDS = 0) are allotted uniquely to each of the digital data. Furthermore, for the cases that CDS ≠ 0 respective "pairs" of the codes of

CDS = +2 and CDS = -4,
CDS = -2 and CDS = +4,
CDS = +2 and CDS = -6 and
CDS = -2 and CDS = +6

are allotted to the digital data. In the above-mentioned pair of the code, a code having small CDS in value, for example, the code of CDS = ±2 is grouped in a "group A". The codes of CDS = ±4 and CDS = ±6 is grouped in a "group B". The code of CDS = 0 belongs to both the group A and the group B.

A selecting method of the code corresponding to the digital data is elucidated as follows: The encoding of a digital data is processed referring to a value of DSV at an end of the preceding code of the present code corresponding to the digital data and a polarity wherein H level of the end bit of the above-mentioned code is assigned to the positive polarity and L level of that is assigned to the negative polarity when an NRZI encoding is applied to the digital data.

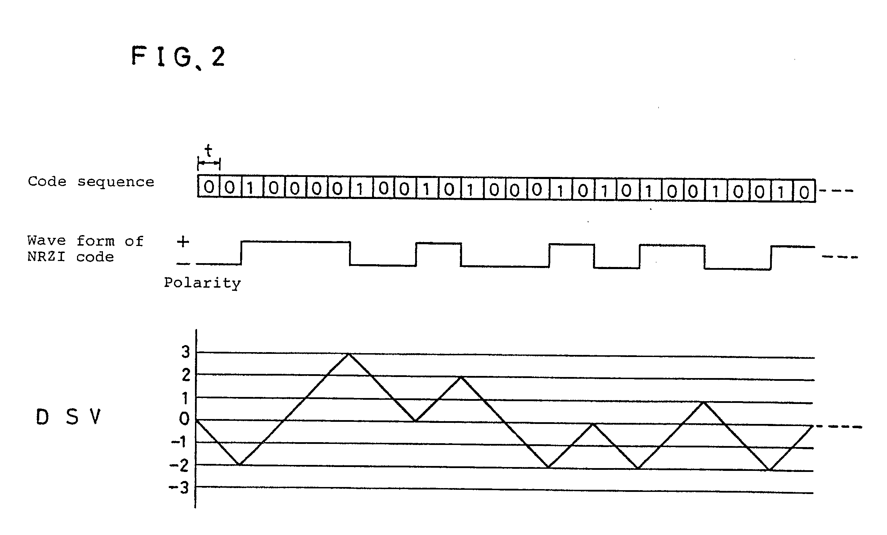

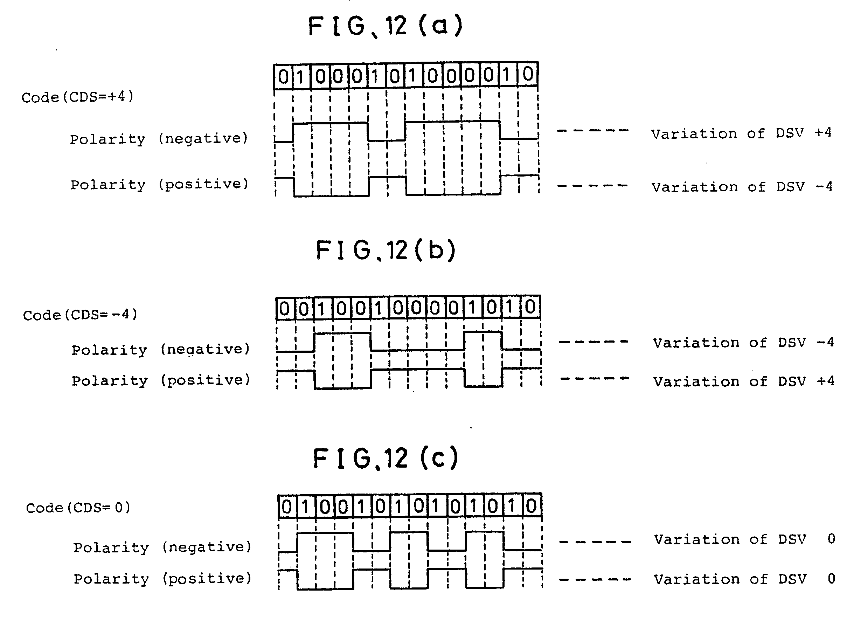

The change of the DSV value and the polarity are shown in FIG.2. The polarity of the wave form of NRZI encoding alternatives at the bit of value "1" of the code sequence. The relation between CDS and DSV of the code is shown in FIG.12. As shown in FIG.12(a), the code wherein the value of CDS is positive increases DSV when the polarity of the starting point of the code is negative, and decreases DSV when the polarity of the starting point of the code is positive. As shown in FIG.12(b), the code wherein the value of CDS is negative decreases DSV when the polarity of the starting point of the code is negative, and increases DSV when the polarity of the starting point of code is positive. As shown in FIG.12(c), the code wherein the value of CDS is "0" maintains DSV at a constant value independent of the polarity of the starting point of the code.

The manner of selecting the code is shown in Table 2.

## Table 2

| DSV at the end point of the preceding code | Polarity at the end point of the preceding code | Usable code | Changing of DSV | |
|---|---|---|---|---|
| Positive | Positive | Code wherein CDS is positive or zero | Decrease or constant | A |
| | Negative | Code wherein CDS is negative or zero | Decrease or constant | B |
| Zero | Positive | Code of group A | +2   or | C |
| | Negative | | 0   or +2 | |
| Negative | Positive | Code wherein CDS is negative or zero | Increase or constant | D |
| | Negative | Code wherein CDS is positive or zero | Increase or constant | E |

The code is selected as it goes to negative value when the value of DSV is positive, and it goes to positive value when the value of DSV is negative. Therefore, the change of value of DSV is restricted in a constant range wherein value "0" is on the center of the constant range.

As shown in column A of Table 2, when the value of DSV at the end point of the code which corresponds to a preceding digital data of the present digital data is positive, the polarity is also positive. The code wherein CDS is positive or zero is selected from the group A and the group B corresponding to the digital data, and is allotted to the digital data.

As shown in the column B of the Table 2, when the value of DSV at the end point of the code which corresponds to a preceding digital data is positive, and the polarity is negative. The code wherein CDS is negative or zero is selected from the group A and the group B corresponding to the digital data, and is allotted to the digital data.

As shown in the column D of the Table 2, when the value of DSV at the end point of the code which corresponds to a preceding data of the present digital data is negative and the polarity is positive, the code wherein CDS is negative or zero is selected from the group A and the group B corresponding to the digital data, and is allotted to the digital data.

As shown in the column E of the Table 2 when the value of DSV at the end point of the code which corresponds to a preceding digital data of the present digital data is negative and the polarity is negative, the code wherein CDS is positive or zero is selected from the group A and the group B corresponding to the digital data, and is allotted to the digital data.

When the value of DSV at the end point of the code which corresponds to the preceding digital data is negative, a DSV-flag correspond to the bit with value "1". When the value of DSV on the above-mentioned condition is positive, the DSV-flag correspond to the bit with value "0". When the polarity on the above-mentioned condition is negative, a polarity flag correspond to the bit of value "1", and when the polarity on the above-mentioned condition is positive, the polarity signal correspond to the bit of value "0". When the exclusive logical sum of the DSV-flag and the polarity signal is "1", the encoding code wherein CDS is negative or zero is allotted to the digital data. As shown in the column C of the Table 2, when the value of DSV at the end point of the code which correspond to the preceding digital data of the present digital data is zero, the code of the group A wherein the absolute value of CDS is small is allotted to the digital data independent of the polarity, and variance of DSV is ±2 or zero. As a result, the value of DSV of the code sequence is limited to a constant range.

In the present embodiment, the absolute value of DSV is equal to or within ±9, and is "0", "±2" or "±4" at the end part of the respective codes.

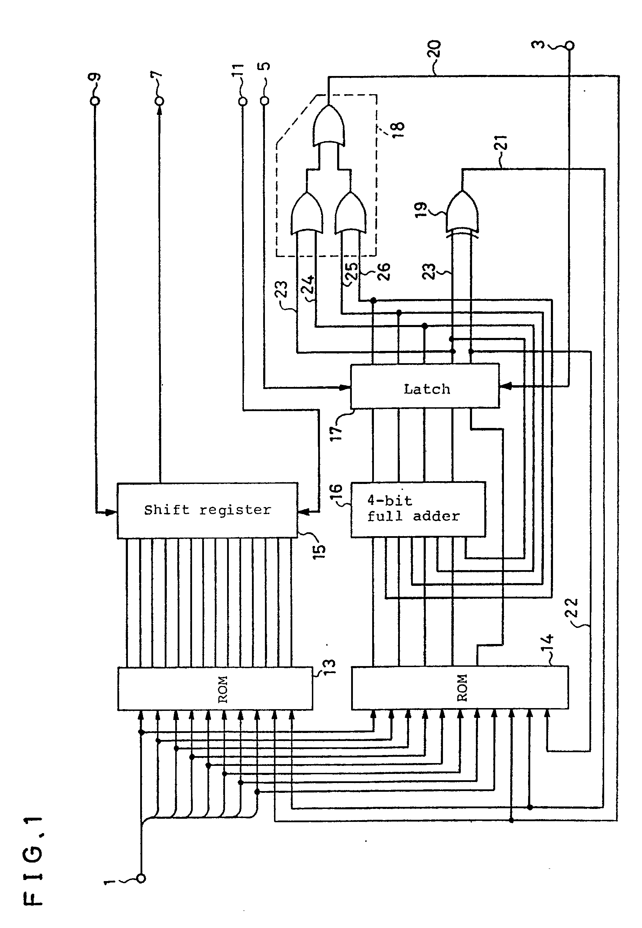

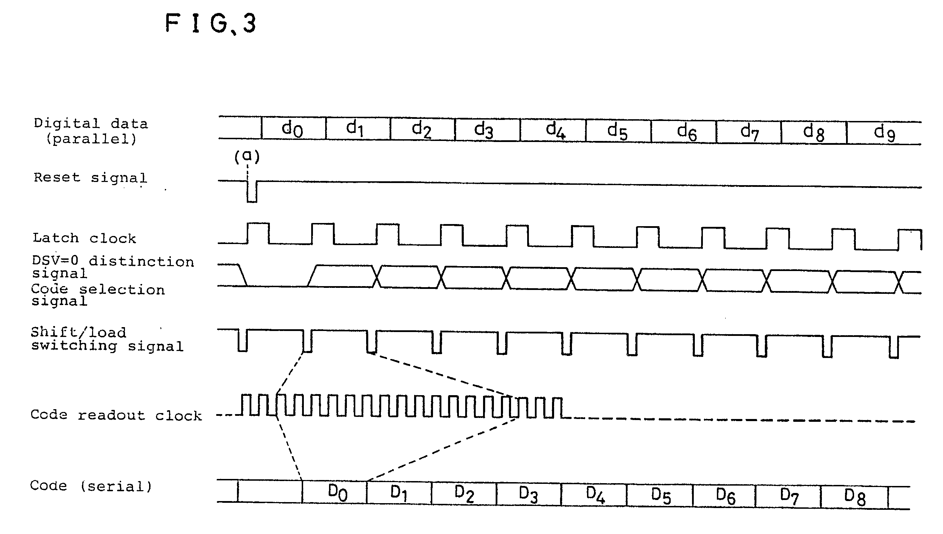

An example of encoding circuit for encoding algorithm in accordance with the present invention is shown in FIG.1, and the timing chart in the operation of the encoding circuit is shown in FIG.3.

In FIG.1, parallel 8-bit digital data are inputted to a ROM 13 and a ROM 14 through an input terminal 1. A reset signal is applied to a five bit latch 17 through a reset input terminal 3. A latch clock is inputted to the latch 17 through a latch clock input terminal 5. A code is issued from a code output terminal 7. A shift/load switching signal is applied to a 14-bit shift register 15 through a shift/load switching signal input terminal 9. A code readout clock is inputted to the shift register through a code readout clock terminal 11. The output of the code output ROM 13 is applied to the shift register 15. A ROM 14 issues CDS signals and polarity signals. A 4-bit full-adder 16 is connected between the ROM 14 and the latch 17. A distinction circuit 18 is formed by three OR gates and distincts the value of DSV at the end point of a code wherein a preceding digital data of the present digital data are encoded. A selection circuit 19 is formed by an exclusive OR gate.

The encoding operation is shown by the timing chart of FIG.3. A low level reset signal for an initial setting is inputted to the latch 17 at a time as shown in FIG.3(a), and the output level of the latch 17 is set to "0". As a result, a distinction signal from the distinction circuit 18, a selection signal and a polarity signal are set to "0". Parallel 8-bit digital data are inputted to the ROM 13 and the ROM 14 in order of $d_1$ , $d_1$ , $d_2$ , $d_3$ , ... through the digital data input terminal 1. Furthermore, the distinction signal and the selection signal are inputted to the ROM 13. The distinction signal, the selection signal and the polarity signal are inputted to the ROM 14. The distinction signal 20 is an output signal wherein a value of DSV at the end point of preceding digital data of the present digital data is discriminated by the distinction circuit 18. When DSV is "0", the output signal is "0". When DSV is not "0", the output signal is "1". The selection signal 21 is an output signal of the selection circuit 19 and is equal to an exclusive logical sum of the polarity signal (A positive signal is "0", and a negative signal is "1".) and to a DSV-flag 23 (A positive flag is shown by "0" and negative flag is shown by "1".) which shows the polarity of DSV.

The ROM 13 processes the 8-bit digital data, the distiction signal and the selection signal, and then outputs a 14-bit code to the shift register 15 according to conditions as shown in the Table 2. The selection of the code, as shown in Table 2, when the distinction signal is "0", the code of the group A wherein an absolute value of CDS is smaller one of two codes corresponding to the 8-bit digital data which are encoded is selected. When the distinction signal is "1" and the selection signal is "0", namely, in Table 2, when DSV at the end point of the code wherein preceding digital data of the present digital data are encoded is positive and the polarity is also positive, and furthermore, when DSV is negative and the polarity is negative, the code wherein CDS is positive or zero is selected from the above-mentioned two codes. When the selection signal is "1", namely in Table 2, when DSV is positive and the polarity is negative, furthermore when the DSV is negative, and the polarity is positive, the code wherein CDS is negative or zero is selected from the above-mentioned two codes.

A shift/load switching signal is inputted to the shift register 15 through the shift/load switching signal input terminal 9, and the code which is output from the ROM 13 is parallelly inputted to the shift register 15 when the shift/load switching signal turns to low level as shown in FIG.3. Code readout clocks 12 are

16

inputted at a timing as shown in FIG.3 from the clock input terminal 11, and the above-mentioned code is serially read. The code which is converted to the serial code is issued from the output terminal 7 in order of $D_1$, $D_2$, $D_3$, ... at a timing as shown in FIG.3. In FIG.3, the time period is enlarged in the abscissa which is drawn by dotted lines. The code which is output by the ROM 13 is decided in the ROM 14 in view of the input 8-bit digital data, the distinction signal and the selection signal.

A variation of DSV which is caused by CDS of the code which is issued from the ROM 14 is output in accordance with the polarity signal. When the variation of DSV is zero, the variation is represented by the binary "0000", and similarly when the variation of DSV are +2, +4, +6, -2, -4 and -6, the respective variations are represented by the binaries "0010", "0100", "0110", "1110", "1100" and "1010", respectively. These variations are inputted to the 4-bit full adder 16. When the number of the bit "1" of the above-mentioned decided code is odd, the ROM 14 reverses the polarity of the input polarity signal and output to the latch 17. When the number of the bit "1" is even, the ROM 14 does not reverse the polarity of the input polarity signal and output to the latch 17.

In the 4-bit full adder 16, the value of DSV at the end point of the code sequence wherein the preceding digital data of the present digital data are encoded and is issued from the latch 17, and the variation of DSV in accordance with the code of the present digital data are added, and the value of DSV at the end point of the code wherein the above-mentioned present digital data is encoded is output to the latch 17. In the latch 17, the inputted new DSV and the polarity signal are held by a rise of latch clock 6 which is inputted from the latch clock input terminal 5 at a timing as shown in FIG.3.

The value of DSV at the end point of the code wherein the above-mentioned present digital data is encoded and is output from the latch 17 is applied to the distinction circuit 18, and is used for encoding next digital data to the present digital data.

The polarity signal is inputted to the selection circuit 19 and to the ROM 14, and is used for encoding next digital data. The above-mentioned process is repeated and the encoding is proceeded. Secondly, an NRZI coding is applied to the code sequence wherein the digital data sequence is encoded in an NRZI coder sequence, and the NRZI code is recorded on the magnetic recording medium through a rotary transformer and a magnetic head of the recording part.

In the reproduction process, the NRZI code sequence is reproduced through the common rotary transformer and a magnetic head of the reproducing part, and the NRZI decoding is processed in the NRZI decoder, and furthermore, a decoding of 8-14 code is processed.

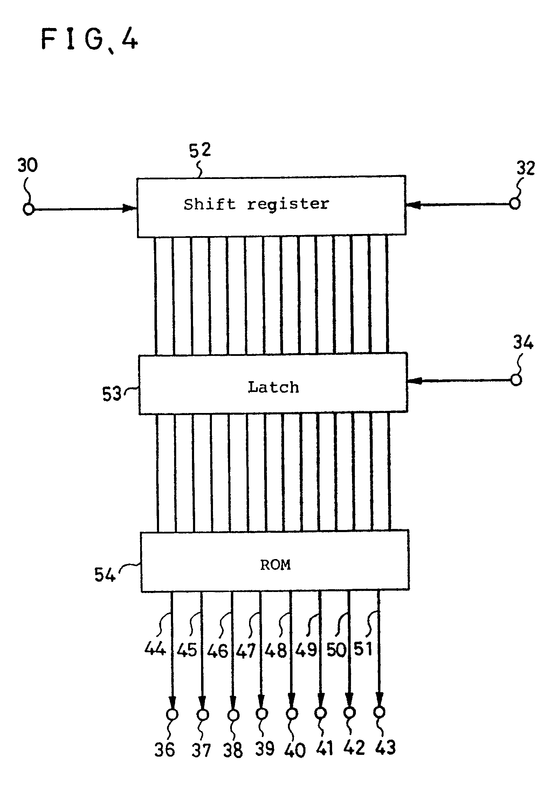

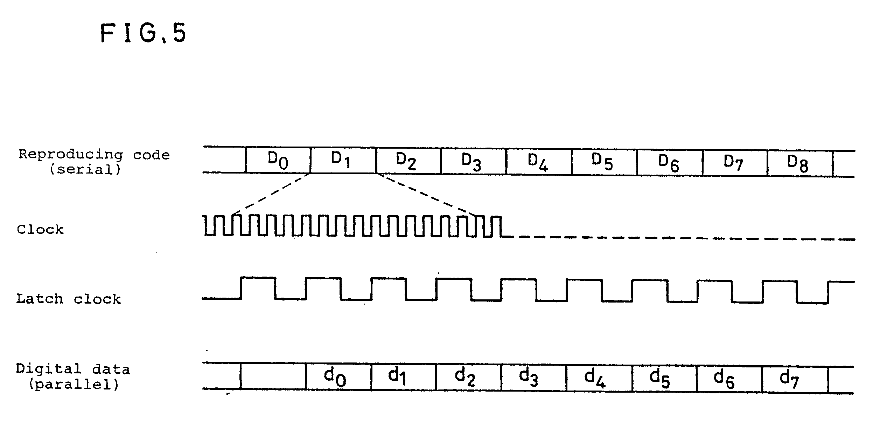

An embodiment of a decoding circuit in accordance with the present invention is shown in FIG.4. The code is inputted to a 14-bit shift register 52 through an input terminal 30. Clock signals are inputted through an input terminal 32. Output signals of the shift register 52 are applied to a 14-bit latch 53. Latch clock signals are inputted through a latch clock input terminal 34. Output signals of the latch 53 are inputted to a ROM 54 for decoding. Decoded digital data are issued parallelly from output terminals 36--43. A timing chart showing the operation of the decoding circuit is shown in FIG.5. The reproduced code are inputted to the shift register 52 sequentially in the order, $D_0$, $D_1$, $D_2$, ... . The clock signals are inputted to the shift register 52 through the terminal 32 at a timing as shown in FIG.5. In FIG.5, a range along an abscissa which is shown enlarged by a dotted line of the clock.

The code sequence which is sequentially inputted from the terminal 33 is shifted one by one of bit synchronizing the clock 33 and is issued to the latch 53 in the shift register 52. The reproduced code sequence is separated to every code which is formed by 14-bit, and is issued to the ROM 54 in the latch 53. For this object, the latch clock 35 which is formed by detecting the below-mentioned frame synchronizing signal is inputted in the latch 53 through the terminal 34 at a timing as shown in FIG.5, and is latched by the rise of the clock 35. The 14-bit code which is issued from the latch 53 is inputted to the ROM 54 as an address, and 8-bit digital data 44--51 corresponding to the above-mentioned 14-bit code are output. The decoded digital data are output parallelly from the output terminals 36--43.

As mentioned above, since the number of bit "0" which is inserted between two bit "1" is restricted to from one to eight, when the code is recorded on the magnetic recording medium, the minimum magnetization reversal interval becomes 1.14T (T is a periodic time of the digital data), the maximum magnetization reversal interval becomes 5.14T, and DR becomes 1.14, and the high density recording is realized. The encoded digital data of the respective pairs of CDS = +2 and CDS = -4, CDS = -2 and CDS = +4, CDS = +2 and CDS = -6 and CDS = -2 and CDS = +6 are allotted to the digital data, and when DSV is not zero, DSV can be restricted to ±9 and below, and DC component decreased. Correspondence between the digital data and the code as shown in Table 1 is changeable. If two codes wherein polarities and absolute values of CDS are different from each other are combined, the combinations of the codes are freely selected.

The frame synchronizing signal is elucidated as follows: The value of the end bit of the code is "0" and the bit "0" of one and over are contained between two bits "1", and the maximum number of the successive bits "0" are limited to eight in the each 14-bit code. Furthermore, the maximum number of the successive bit "0" are limited to four at the head part and the tail part of the code. Furthermore, the code which consists of 14-bit and wherein the bits "0" of three and over continue at the head part or the tail part is excepted from the code. Moreover, the code wherein the bits "0" of seven and over follow to the above-mentioned successive three bit "0" and a bit "1" is inserted between the two groups of bit "0" is also excepted from the code. Therefore, the pattern of "10000000" appears at the successive part of the code, however, the successive patterns of "10000000" do not appear at the front and the rear of the above-mentioned pattern. Therefore, the pattern of "1000000010000000" does not appear in the code sequence. The bit "10" is added to the end of the pattern in order to meet to the above-mentioned restriction of succession of the bit "0". Similarly, the bit "10" is added to the head of the pattern in order to meet to the restriction of continuation of the bit "0" and to make CDS of the frame synchronizing signal to zero.

The following 28-bits of "XXXXXXXXXX100000001000000010" are used for a frame synchronizing signal. (The part which is shown by "X" represents an optionally decided ten bits of "10" wherein the restriction of succession of the bit "0" is satisfied and CDS of the synchronizing signal of 28-bit become "0".)

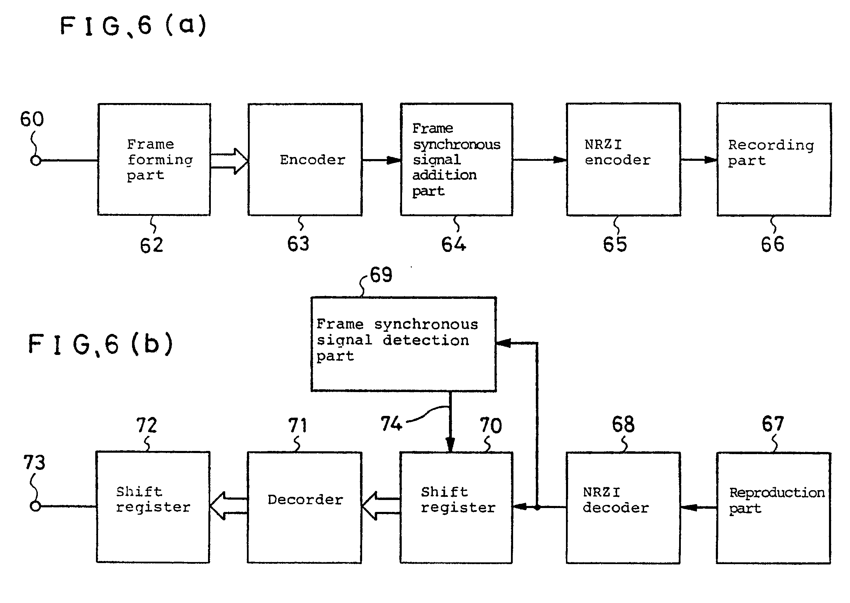

In FIG.6, the block diagram of a signal processing circuit including an addition part of the frame synchronizing signal and a detection part in accordance with the present invention is shown. The digital data are inputted to a frame forming part 62 through a digital data input terminal 60. The output of the frame forming part 62 is applied to an encoder 63. The output of the encoder 63 is applied to a frame synchronizing signal addition part 64. The output of the frame synchronizing signal addition part 64 is applied to an NRZI encoder 65. The output of the NRZI encoder 65 is recorded on a recording medium through a recording part 66.

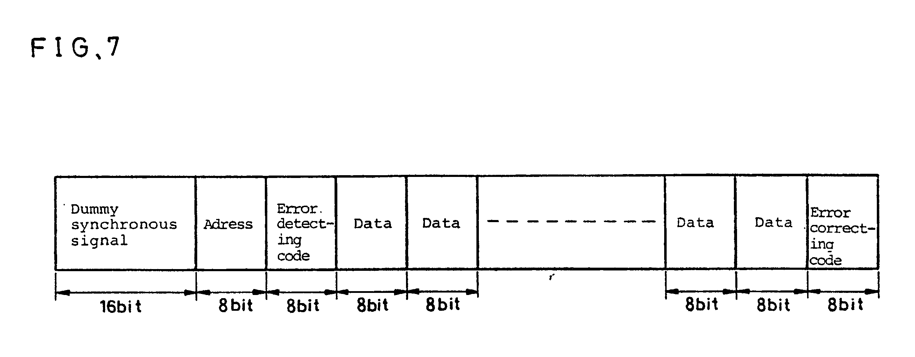

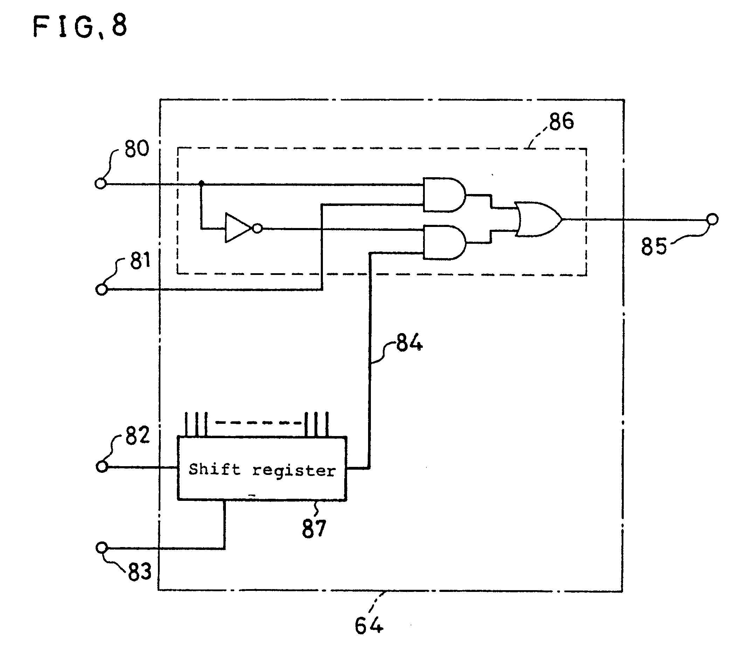

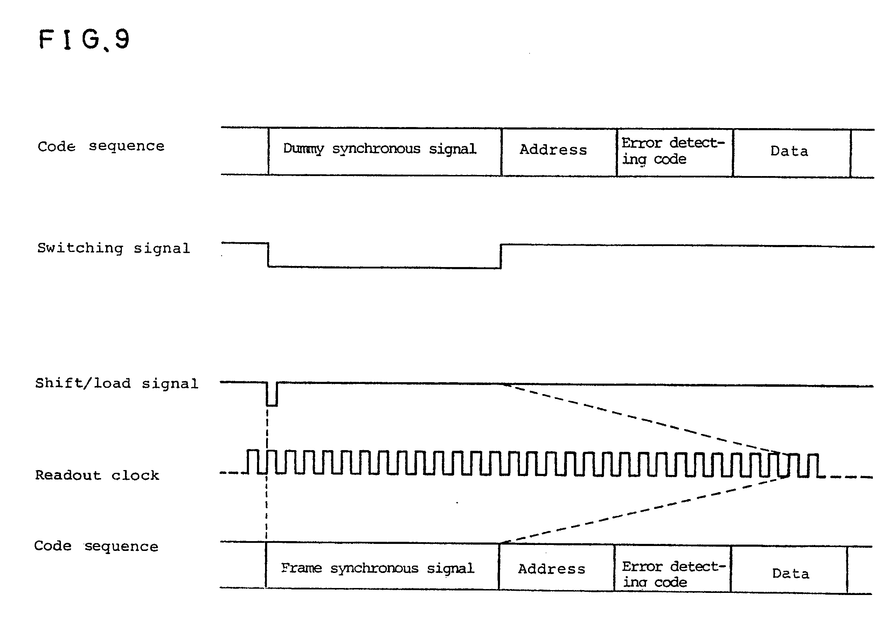

In a reproduction process, the recorded signals are detected by a reproduction part 67, and are decoded by an NRZI decoder 68. The output of the NRZI decoder is inputted to a frame synchronizing signal detection part 69 and a shift register 70. The output of the shift register 70 is applied to a decoder 71. An encoded digital data separation signal is output from the frame synchronizing signal detection part 69 and is inputted to the shift register 70. The output of the decoder 71 is applied to a shift register 72 and is issued from a digital data output terminal 73. As shown in FIG.7, a dummy synchronizing signal, an address, an address error detecting code and an error correction code are added to a digital data, thereby to form a frame in the frame forming part 62. The frame is output to the encoder 63. The frame is encoded in accordance with the above-mentioned 8-14 encode algorithm by the encoder 63, and the encoded frame signal is applied to the frame synchronizing signal addition circuit 64. In the frame synchronizing signal addition circuit 64, the dummy synchronizing signal which consists of 28-bits signal is replaced by the normal synchronizing signal of "XXXXXXXXXX100000001000000010". The frame synchronizing signal addition circuit is shown in FIG.8. A switching signal and the code sequence are inputted to a switching circuit 86 in accordance with the timing as shown in FIG.9 through a switching signal input terminal 80 and the code sequence input terminal 81, respectively. The code sequence wherein the frame synchronizing signal is replaced is output from the code output terminal 85. A shift/load signal and a readout clock are inputted to a shift register 87 in accordance with the timing as shown in FIG.9 through a shift/load signal input terminal 82 and a readout clock input terminal 83, respectively. The shift register 87 is a 28-bit parallel input and serial output shift register. The shift register 87 reads a frame synchronizing signal in accordance with the shift/load signal 82 and outputs the frame synchronizing signal to the switching circuit 86 synchronizing readout clock 83. In switching circuit, the dummy synchronizing signal of the code sequence is replaced by the frame synchronizing signal and the code is output.

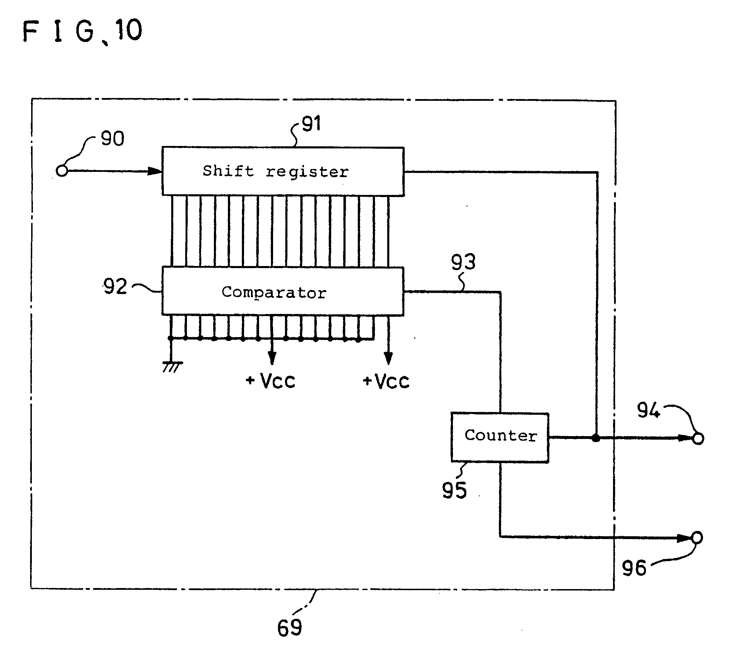

The frame synchronizing signal detection circuit 69 is shown in FIG.10. Reproduced code sequence is inputted to a 16-bit shift register 91 in the frame synchronizing signal detection circuit 69. The above-mentioned reproduced code sequence is shifted one by one of bits by the clock signal 94 in the shift register 91. The output of the shift register 91 is inputted to a comparator 92 and is compared with a 16-bit pattern "1000000010000000" which does not appear in the code sequence of the frame synchronizing signal which consist of 28-bit, and the synchronizing signal of each frame is detected. When the output of the shift register 91 agrees with the 16-bit pattern, a detecting signal 93 is output from the comparator 92 and is applied to a counter 95. The counter 95 is loaded with a predetermined value by the detecting signal 93, and is operated as a counter wherein the figure is taken up at fourteen. As a result, a code dividing signal 96 for dividing the reproduced code sequence into respective codes is output.

In FIG.6, the shift register 70 divides the reproduced code sequence which is inputted serially into the codes and applied to the decoder 71. In the decoder 71, the 8-bit digital data corresponding to the inputted code is output to the shift register 72. The inputted 8-bit digital data is output serially from the digital data output terminal 73. As mentioned above, the frame synchronizing signal including the 16-bit pattern "1000000010000000" which does not appear in the code sequence, when 8-14 encoding is adopted, is recorded. Hence, the frame synchronizing signal can be detected precisely by a simple circuit.

## Claims

1. Digital data recording and reproducing method comprising the steps:
   dividing digital data into digital datawords each having 8 bits,
   converting each digital dataword having 8 bits into a codeword of a code with every codeword has m bits > 8 bits, in which every dataword is alloted to one codeword with a codeword digital sum being zero or to one codeword of a pair of two codewords each having a codeword digital sum being not zero, wherein the codewords of the pair of two codewords are different to each other in the polarity of codeword digital sum and wherein the one codeword of the pair of two codewords is selected for use so that the value of digital sum variation of a codeword is limited, and
   in which the maximum number of consecutive bits "0" between two neighbouring bits "1" is restricted in every codeword, and
   producing a recording signal by a NRZI modulation of the codewords,
   **characterized in that**
   every codeword has m = 14 bits,
   the maximum number of consecutive bits "0" is at least one but not more than eight, and
   the codewords of each pair of two codewords are different to each other in the absolute value of the codeword digital sum.

2. Digital data recording and reproducing apparatus comprising:
   means (13, 14, 16, 17, 18, 19) for converting digital datawords of 8 bits into codewords of m bits of a code, wherein m > 8 bits, in which every dataword is alloted to one codeword being zero in codeword digital sum or to one codeword of a pair of two codewords being different from each other in polarity of codeword digital sum, wherein the one codeword of the pair of two codewords is selected for use so that the maximum absolute value of digital sum variation of the codeword is limited, and
   means for producing a recording signal by NRZI modulation of the codewords,
   the means for converting of digital datawords comprising:
   means (13) for generating a codeword with m bits on the basis of a dataword with 8 bits and a control signal (20, 21),
   means (14, 16, 17, 18, 19) for generating the control signal (20, 21) for controlling selection of the codeword, which comprise:
   means (14, 16, 17, 18) for generating a distinction signal (20) of the control signal (20, 21) on the basis of the value of the digital sum variation at the endpoint of the codeword of the preceding dataword, wherein the distinction signal (20) is related to the value of the digital sum variation at the endpoint of the codeword of the preceding dataword,
   means (14, 16, 17, 19) for generating a selection signal (21) of the control signal (20, 21) on the basis of the polarity of the value of the digital sum variation at the endpoint of the codeword of the preceding dataword, wherein the selection signal (20) is related to the polarity of the digital sum variation at the endpoint of the codeword of the preceding dataword,
   **characterized in that**
   the means (13) for generating a codeword select on the basis of the control signal (20, 21) the one codeword of the pair of two codewords if the digital sum variation of the codeword of the preceding dataword is not zero, wherein the codewords of the pair of two codewords are different to each other in the absolute value of codeword digital sum, and
   the means (13) for generating a codeword provides codewords of m = 14 bits, wherein the number of consecutive bits "0" between neighbouring two bits "1" is at least on bit but not more than eight bits in a codeword.

3. Digital data recording and reproducing method in accordance with claim 1, wherein
   a bit sequence which never arise in a code sequence wherein a digital data sequence is encoded is used as a frame synchronizing signal.

4. Digital data recording and reproducing method in accordance with claim 3, wherein
   an N-bit sequence (N≧16) including a pattern "1000000010000000" which does not coincide to an optional continuous 16-bit code which is extracted from a code sequence wherein a digital data sequence is encoded is recorded as a frame synchronizing signal.

## Revendications

1. Procédé pour l'enregistrement et la reproduction de données numériques comprenant les étapes consistant à :
   - diviser une donnée numérique en mots contenant des données numériques ayant chacune 8 bits,
   - convertir chaque mot contenant des données numériques ayant 8 bits en un mot de code d'un code avec chaque mot de code ayant m bits > 8 bits, dans lequel chaque mot contenant des données est affecté à un mot de code avec une somme numérique des mots de code égale à zéro ou à un mot de code d'une paire de deux mots de code ayant chacun une somme numérique de mots de code non égale à zéro, où les mots de code de la paire de deux mots de code sont différents l'un de l'autre dans la polarité de la somme numérique des mots de code et où ledit mot de code de la paire de deux mots de code est choisi pour emploi de façon que la valeur de la variation de la somme numérique d'un mot de code soit limitée, et
   - dans lequel le nombre maximum de bits "0" consécutifs entre deux bits "1" voisins est limité dans chaque mot de code, et
   - produire un signal d'enregistrement par une modulation NRZI des mots de code, caractérisé en ce que :
   - chaque mot de code comporte m = 14 bits,
   - le nombre maximum des bits "0" consécutifs est au moins un mais pas plus de huit, et
   - le mots de code de chaque paire de deux mots de code sont différents l'un de l'autre en matière de valeur absolue de la somme numérique des mots de code.

2. Dispositif d'enregistrement et de reproduction de données numériques comprenant :
   - des moyens (13, 14, 16, 17, 18, 19) pour convertir des mots contenant des données numériques de 8 bits en mots de code de m bits d'un code, où m > 8 bits, dans lequel chaque mot contenant des données est affecté à un mot de code égal à zéro dans une somme numérique de mots de code ou à un mot de code d'une paire de deux mots de code différents l'un de l'autre en polarité de la somme numérique des mots de code, où ledit mot de code de la paire de deux mots de code est sélectionné pour emploi de façon que la valeur absolue maximum de la variation de la somme numérique du mot de code soit limitée, et
   - des moyens pour produire un signal d'enregistrement par modulation NRZI des mots de code,
   - les moyens pour convertir des mots contenant des données numériques comprenant :
   - des moyens (13) pour produire un mot de code avec m bits sur la base d'un mot contenant des données avec 8 bits et un signal de commande (20, 21),
   - des moyens (14, 16, 17, 18, 19) pour générer le signal de commande (20, 21) afin de commander la sélection du mot de code, qui comprennent :
   - des moyens (14, 16, 17, 18) pour générer un signal de distinction (20) du signal de commande (20, 21) sur la base de la valeur de la variation de la somme numérique au point d'extrémité du mot de code du mot contenant des données précédent, où le signal de distinction (20) est lié à la valeur de la variation de la somme numérique au point d'extrémité du mot de code du mot contenant des données précédent,
   - des moyens (14, 16, 17, 19) pour générer un signal de sélection (21) du signal de commande (20, 21) sur la base de la polarité de la valeur de la variation de la somme numérique au point d'extrémité du mot de code du mot contenant des données précédent, où le signal de sélection (20) est lié à la polarité de la variation de la somme numérique au point d'extrémité du mot de code du mot contenant des données précédent, caractérisé en ce que :
   - les moyens (13) pour générer un mot de code sélectionné sur la base du signal de commande (20, 21), ledit mot de code de la paire de deux mots de code si la variation de la somme numérique du mot de code du mot contenant des données précédent n'est pas zéro, où les mots de code de la paire de deux mots de code sont différents l'un de l'autre dans la valeur absolue de la somme numérique des mots de code, et
   - les moyens (13) pour générer un mot de code fournit des mots de code de m = 14 bits, où le nombre des bits "0" consécutifs entre deux bits "1" voisins est au moins un bit mais pas plus de huit bits dans un mot de code.

20

3. Procédé d'enregistrement et de reproduction de données numériques selon la revendication 1, dans lequel :

- une séquence de bits qui ne s'élève jamais dans une séquence de codes où une séquence de données numériques est codée est employée comme signal de synchronisation de trame.

4. Procédé d'enregistrement et de reproduction de données numériques selon la revendication 3, dans lequel :

- une séquence de N-bits (N≧16) comportant un profil "1000000010000000" qui ne coïncide pas avec un code de 16 bits continus en option extrait d'une séquence de codes dans laquelle une séquence de données numérique est codée est enregistrée comme signal de synchronisation de trame.

**Patentansprüche**

1. Digitales Datenaufzeichnungs- und -wiedergabeverfahren, welches folgende Schritte umfaßt:
   - Unterteilen von digitalen Daten in digitale Datenwörter mit jeweils 8 Bits,
   - Umwandeln jedes Datenworts mit 8 Bits in ein Kodewort eines Kodes, wobei jedes Kodewort m Bits > 8 Bits hat, wobei jedes Datenwort einem Kodewort mit einer Kodewort-Digital-Summe gleich Null oder einem Kodewort eines Paares von zwei Kodewörtern, von denen jedes eine Kodewort-Digital-Summe ungleich Null hat, zugeordnet wird, wobei sich die Kodewörter des Paares von Kodewörtern voneinander in der Polarität der Kodewort-Digital-Summe unterscheiden und wobei ein Kodewort des Paares von Kodewörtern zur Verwendung so gewählt wird, daß der Wert der Digital-Summen-Änderung eines Kodeworts begrenzt ist, und
   - wobei die maximale Anzahl von aufeinanderfolgenden "0"-Bits zwischen zwei benachbarten "1"-Bits in jedem Kodewort begrenzt ist, und
   - Erzeugen eines Aufzeichnungssignals durch NRZI-Modulation der Kodewörter,

   **dadurch gekennzeichnet, daß**
   - jedes Kodewort m = 14 Bits hat,
   - die maximale Anzahl von aufeinanderfolgenden "0"-Bits wenigstens eins aber nicht mehr als acht ist, und
   - sich die Kodewörter jedes Paares von Kodewörtern voneinander in dem absoluten Wert der Kodewort-Digital-Summe unterscheiden.

2. Digitale Datenaufzeichnungs- und -wiedergabeeinrichtung mit
   - Einrichtungen (13, 14, 16, 17, 18, 19) zum Umwandeln digitaler 8-Bit-Kodewörter in Kodewörter mit m Bits eines Kodes, wobei m > 8 Bits ist, wobei jedes Datenwort einem Kodewort mit der Kodewort-Digital-Summe Null oder einem Kodewort eines Paares von zwei Kodewörtern zugeordnet ist, die sich in der Polarität den Kodewort-Digital-Summe voneinander unterscheiden, wobei das eine Kodewort des Paares von zwei Kodewörtern für die Verwendung so gewählt wird, daß der maximale Absolutwert der Digital-Summen-Änderung des Kodeworts begrenzt ist, und
   - einer Einrichtung zum Erzeugen eines Aufzeichnungssignals durch NRZI-Modulation der Kodewörter,
   - wobei die Einrichtung zum Umwandeln der digitalen Datenwörter aufweist:
   - eine Einrichtung (13) zum Erzeugen eines m-Bit-Kodeworts auf der Grundlage eines 8-Bit-Datenworts und eines Steuersignals (20, 21),
   - Einrichtungen (14, 16, 17, 18, 19) zum Erzeugen des Steuersignals (20, 21) zum Steuern der Auswahl des Kodeworts mit:
   - Einrichtungen (14, 16, 17, 18) zum Erzeugen eines Unterscheidungs-Signals (20) des Steuersignals (20, 21) auf der Grundlage des Betrags der Digital-Summen-Änderung am Endpunkt des Kodeworts des vorherigen Datenworts, wobei das Unterscheidungs-Signal (20) zum Betrag der Digital-Summen-Änderung am Endpunkt des Kodeworts des vorherigen Datenworts in Beziehung steht,
   - Einrichtungen (14, 16, 17, 19) zum Erzeugen eines Auswahl-Signals (21) des Steuersignals (20, 21) auf der Grundlage der Polarität des Wertes der Digital-Summen-Änderung am Endpunkt des Kodeworts des vorherigen Datenworts, wobei das Auswahl-Signal (20) zum Wert der Polarität der Digital-Summen-Änderung am Endpunkt des Kodeworts des vorherigen Datenworts in Beziehung steht,

   **dadurch gekennzeichnet, daß**

EP 0 193 153 B1

- die Einrichtungen (13) zum Erzeugen der Kodeworts auf der Grundlage des Steuersignals (20, 21) das eine Kodewort eines Paares von zwei Kodewörtern auswählen, wenn die Digital-Summen-Änderung des Kodeworts des vorherigen Datenworts nicht Null ist, wobei sich die Kodewörter des Paares von zwei Kodewörten voneinander in dem Absolutwert der Kodewort-Digital-Summe unterscheiden, und

- die Einrichtung (13) zum Erzeugen eines Kodeworts Kodewörter mit m = 14 Bits liefert, wobei die Anzahl von aufeinanderfolgenden Bits zwischen zwei benachbarten "1"-Bits wenigstens ein Bit, aber nicht mehr als acht Bits in einem Kodewort beträgt.

3. Verfahren zur Aufnahme und Wiedergabe von Daten nach Anspruch 1, wobei als Bildsynchronisierungssignal eine Bit-Folge verwendet wird, die nie in einer Kode-Folge auftaucht, in der eine digitale Daten-Folge kodiert ist.

4. Verfahren zur Aufnahme und Wiedergabe von Daten nach Anspruch 3, wobei als Bildsynchonisationssignal eine N-Bit-Folge (N≧16) aufgezeichnet wird, die ein Raster "1000000010000000" einschließt, das nicht mit einem frei wählbaren 16-Bit-Kode zusammenfällt, der aus einer Kode-Folge extrahiert wird, bei der eine digitale Daten-Folge kodiert wird.

22

FIG.1

# FIG. 2

Code sequence

|0|0|1|0|0|0|0|1|0|0|1|0|1|0|0|0|1|0|1|0|1|0|0|1|0|0|1|0|---

Wave form of
NRZI code

Polarity

D S V

EP 0 193 153 B1

# F I G, 3

EP 0 193 153 B1

FIG.4

# FIG. 5

| Reproducing code (serial) | | $D_0$ | $D_1$ | $D_2$ | $D_3$ | $D_4$ | $D_5$ | $D_6$ | $D_7$ | $D_8$ | |

Clock

Latch clock

| Digital data (parallel) | | | $d_0$ | $d_1$ | $d_2$ | $d_3$ | $d_4$ | $d_5$ | $d_6$ | $d_7$ | |

EP 0 193 153 B1

# FIG.6 (a)

```
60 ○─── [Frame forming part] ══▷ [Encoder] ──▶ [Frame synchronous signal addition part] ──▶ [NRZI encoder] ──▶ [Recording part]
              62                    63                    64                                    65                  66
```

# FIG.6 (b)

```
                                              [Frame synchronous signal detection part] 69
                                                            │                    ▲
        72          71            74        70             ▼                    │
73 ○◀── [Shift register] ◀══ [Decoder] ◀══ [Shift register] ◀── [NRZI decoder] ◀── [Reproduction part]
              72          71                70                 68                67
```

EP 0 193 153 B1

EP 0 193 153 B1

# FIG.7

| Dummy synchronous signal | Adress | Error detecting code | Data | Data | — — — — — — — — | Data | Data | Error correcting code |
|---|---|---|---|---|---|---|---|---|
| 16bit | 8bit | 8bit | 8bit | 8bit | | 8bit | 8bit | 8bit |

FIG.8

Shift register

EP 0 193 153 B1

# F I G.9

| Code sequence | Dummy synchronous signal | Address | Error detecting code | Data | |

Switching signal

Shift/load signal

Readout clock

| Code sequence | Frame synchronous signal | Address | Error detecting code | Data | |

EP 0 193 153 B1

F I G、10

Shift register 91

90

92 Comparator

93

+Vcc    +Vcc

Counter 95

94

96

69

EP 0 193 153 B1

# F I G.11 (a)

Code

| 0 | 1 | 0 | 1 | 0 | 1 | 0 | 0 | 0 | 0 | 1 | 0 | 1 | 0 |

Wave form of NRZI code

CDS

| −1 | +1 | +1 | −1 | −1 | +1 | +1 | +1 | +1 | +1 | −1 | −1 | +1 | +1 |   +4

# F I G.11 (b)

Code

| 1 | 0 | 1 | 0 | 0 | 1 | 0 | 1 | 0 | 0 | 0 | 1 | 0 | 0 |

Wave form of NRZI code

CDS

| +1 | +1 | −1 | −1 | −1 | +1 | +1 | −1 | −1 | −1 | −1 | +1 | +1 | +1 |   0

EP 0 193 153 B1

# F I G、12 (a)

Code (CDS=+4)

| 0 | 1 | 0 | 0 | 0 | 1 | 0 | 1 | 0 | 0 | 0 | 0 | 1 | 0 |

Polarity (negative) — — — — — Variation of DSV +4

Polarity (positive) — — — — — Variation of DSV -4

# F I G、12 (b)

Code (CDS= -4)

| 0 | 0 | 1 | 0 | 0 | 1 | 0 | 0 | 0 | 0 | 1 | 0 | 1 | 0 |

Polarity (negative) — — — — — Variation of DSV -4

Polarity (positive) — — — — — Variation of DSV +4

# F I G、12 (c)

Code (CDS= 0)

| 0 | 1 | 0 | 0 | 1 | 0 | 1 | 0 | 1 | 0 | 1 | 0 | 1 | 0 |

Polarity (negative) — — — — — Variation of DSV 0

Polarity (positive) — — — — — Variation of DSV 0

EP 0 193 153 B1

34